# EUROPEAN PATENT APPLICATION

(11) **EP 4 542 601 A1**
(43) Date of publication of application: **23.04.2025**
(21) Application number: 24194504.7
(22) Date of filing: 14.08.2024
(51) Int. Cl.: H01G 4/30, H01G 2/24, H01G 4/12, H01G 4/224, H01G 2/10

(54) **MULTILAYER ELECTRONIC COMPONENT**

(30) Priority: 16.10.2023 KR 20230137728
(71) Applicant: Samsung Electro-Mechanics Co., Ltd., Gyeonggi-do (KR)
(72) Inventor: Jeon, Ki Hun, Suwon-si, Gyeonggi-do (KR); Lee, Ji Won, Suwon-si, Gyeonggi-do (KR); Kim, Sang Yeop, Suwon-si, Gyeonggi-do (KR)
(74) Representative: Grünecker Patent- und Rechtsanwälte PartG mbB

(57) **Abstract**

A multilayer electronic component may include: a body including a capacitance formation portion including a dielectric layer and an internal electrode alternately disposed with the dielectric layer in a first direction, an upper cover portion disposed above the capacitance formation portion in the first direction, a lower cover portion disposed below the capacitance formation portion in the first direction, and an identification portion disposed above the upper cover portion in the first direction; and an external electrode disposed on the body, and an average thickness of the lower cover portion may be greater than an average thickness of the upper cover portion, and the identification portion may include a water-repellent material and a nonconductive heat-resistant paint.

## Description

### CROSS-REFERENCE TO RELATED APPLICATION(S)

This application claims benefit of priority to Korean Patent Application No. 10-2023-0137728 filed on October 16, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser mounted on the printed circuit boards of various electronic products, such as image display devices including a liquid crystal display (LCD) and a plasma display panel (PDP), computers, smartphones and mobile phones, serving to charge or discharge electricity therein or therefrom.

The multilayer ceramic capacitor may be used as a component in various electronic devices due to having a small size, ensuring high capacitance and being easily mounted, and with the miniaturization and high output power of various electronic devices such as computers and mobile devices, demand for miniaturization and high capacitance of multilayer ceramic capacitors has also been increasing.

When applying a direct current or alternating current voltage to a multilayer ceramic capacitor in which internal electrodes overlap each other with a dielectric layer interposed therebetween, a piezoelectric phenomenon occurs between the internal electrodes and vibrations occur.

As a dielectric constant of the dielectric layer, the vibration tends to become noticeable when a shape of a chip is relatively large based on the same capacitance. The vibrations are transmitted from an external electrode of the multilayer ceramic capacitor to a printed circuit board on which the multilayer ceramic capacitor is mounted. In this case, the printed circuit board vibrates to generate noise.

That is, when the noise generated by the vibration of the printed circuit board is included in the audible frequency (20 to 20000 Hz) range, a vibration sound thereof is unpleasant to people, and this type of sound is known as acoustic noise.

In order to reduce the acoustic noise, a technology has been developed to stack a lower portion of a capacitance formation portion thickly, and dispose a light cover on a lower portion of the capacitance formation portion to identify the lower portion of the capacitance formation portion in addition to a lower cover portion.

However, in order to achieve sensitivity to identify the lower portion of the capacitance formation portion, design freedom may be reduced because the light cover must be thick, and moisture resistance reliability may be lowered because a thickness of the upper cover portion is not easily secured.

Accordingly, there is demand for the development of a structure that may secure moisture resistance reliability while reducing the acoustic noise.

### [Prior Art Reference]

### [Patent Document]

(Patent Document 1) Korean Patent Laid-open Publication No. 10-2014-0012577

### SUMMARY

An aspect of the present disclosure is to provide a multilayer electronic component having excellent reliability.

An aspect of the present disclosure is to reduce acoustic noise in a multilayer electronic component.

An aspect of the present disclosure is to easily identify an upper portion and a lower portion of a multilayer electronic component.

However, the aspects of the present disclosure are not limited to the above-described contents, and may be more easily understood in the process of describing specific embodiments of the present disclosure.

According to an aspect of the present disclosure, a multilayer electronic component may include: a body including a capacitance formation portion including a dielectric layer and an internal electrode alternately disposed with the dielectric layer in a first direction, an upper cover portion disposed above the capacitance formation portion in the first direction, a lower cover portion disposed below the capacitance formation portion in the first direction, and an identification portion disposed above the upper cover portion in the first direction; and an external electrode disposed on the body, wherein an average thickness of the lower cover portion is greater than an average thickness of the upper cover portion, and the identification portion includes a water-repellent material and a non-conductive heat-resistant paint.

One of various effects of the present disclosure is to improve moisture resistance reliability of a multilayer electronic component.

One of various effects of the present disclosure is to reduce acoustic noise of a multilayer electronic component.

One of various effects of the present disclosure is to easily discriminate between an upper portion and a lower portion of a multilayer electronic component.

However, advantages and effects of the present disclosure are not limited to the above-described contents, and may be more easily understood in the process of describing specific embodiments of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a schematic cross-sectional view taken along line I-I' of FIG. 1;
FIG. 3 is a schematic cross-sectional view of II-II' of FIG. 1;
FIG. 4 is a view corresponding to FIG. 2 as a multilayer electronic component according to another example embodiment of the present disclosure;
FIG. 5 is a perspective view schematically illustrating a conventional multilayer electronic component; and
FIG. 6 is a schematic cross-sectional view taken along line III-III' of FIG. 5.

### DETAILED DESCRIPTION

Hereinafter, example embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

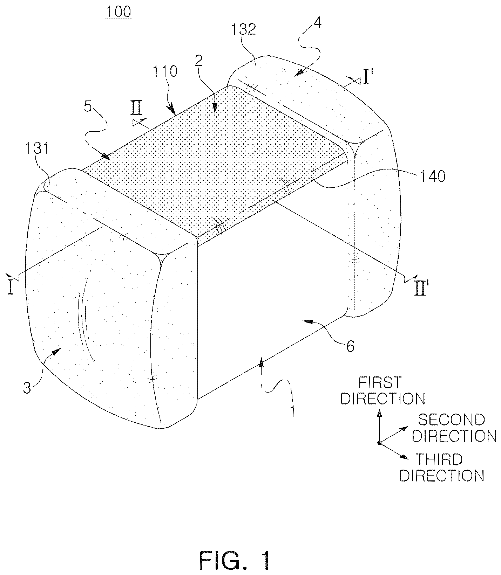

FIG. 1 is a perspective view schematically illustrating a multilayer electronic component according to an example embodiment of the present disclosure.

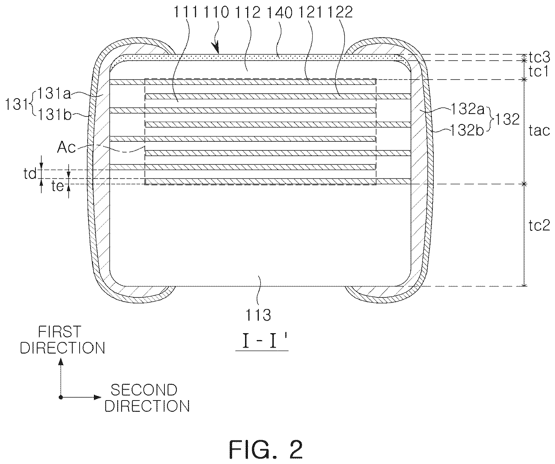

FIG. 2 is a schematic cross-sectional view taken along line I-I' of FIG. 1.

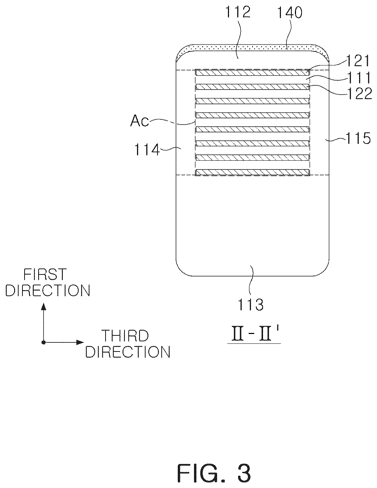

FIG. 3 is a schematic cross-sectional view of II-II' of FIG. 1.

Hereinafter, a multilayer electronic component 100 according to some example embodiments of the present disclosure will be described in detail with reference to FIGS. 1 to 3. Additionally, as an example of a multilayer electronic component, a multilayer ceramic capacitor (hereinafter referred to as 'MLCC') will be described, but the present disclosure is not limited thereto.

The multilayer electronic component 100 according to some example embodiments of the present disclosure may include a body 110 including a capacitance formation portion Ac including a dielectric layer 111 and internal electrodes 121 and 122 alternately disposed with the dielectric layer in a first direction, an upper cover portion 112 disposed above and adjacent to the capacitance formation portion in the first direction, a lower cover portion 113 disposed below and adjacent to the capacitance formation portion in the first direction, and an identification portion 140 disposed on an upper portion of the upper cover portion in a first direction; and external electrodes 131 and 132 disposed on the body, and an average thickness tc2 of the lower cover portion is greater than an average thickness tc1 of the upper cover portion, and the identification portion 140 may include a water-repellent material and a non-conductive heat-resistant paint.

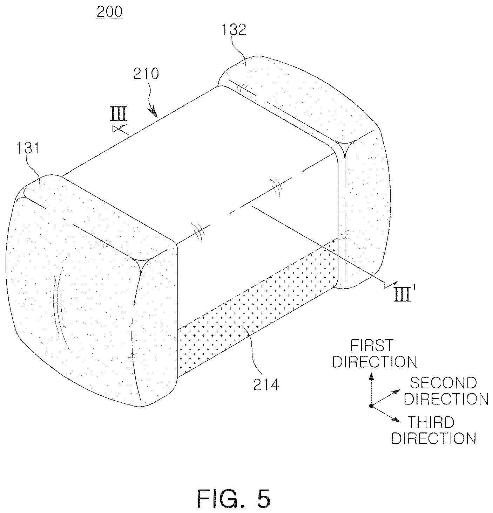

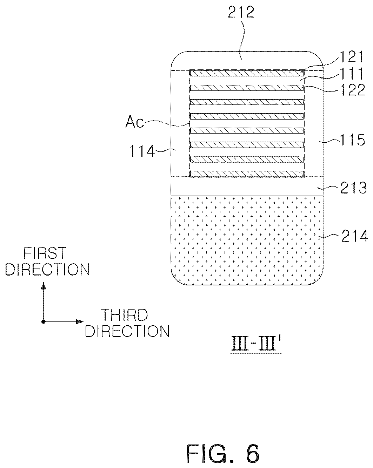

FIG. 5 is a perspective view schematically illustrating a conventional multilayer electronic component 200, and FIG. 6 is a schematic cross-sectional view taken along line III-III' of FIG. 5.

In the conventional multilayer electronic component 200, a lower portion of the capacitance formation portion (Ac) was thickly stacked to reduce acoustic noise, and in addition to a lower cover portion 213 of the same composition as an active portion, a light cover 214 for identifying a lower portion of the capacitance formation portion was disposed in the lower portion of the capacitance formation portion, thus identifying an upper portion and a lower portion of the multilayer electronic component 200.

However, in order to implement sensitivity for identifying the upper portion and the lower part portion of the multilayer electronic component 200, as illustrated in FIG. 6, there was a problem in that design freedom was reduced because the light cover 214 had to be thicker than the lower cover portion 213, and because the thickness of the upper cover portion 212 was not easily secured, there was a problem in that moisture resistance reliability was lowered.

On the other hand, in the present disclosure, the identification portion 140 including a water-repellent material and a non-conductive heat-resistant paint may be disposed on an upper portion of the upper cover portion 112 in a first direction, thereby reducing acoustic noise while securing humidity resistance reliability.

Hereinafter, each configuration included in the multilayer electronic component 100 according to some example embodiments of the present disclosure will be described.

The body 110 may include dielectric layers 111 and internal electrodes 121 and 122 alternately stacked.

There is no particular limitation on a specific shape of the body 110, but as illustrated, the body 110 may have a hexahedral shape or a shape similar thereto. Due to contraction of ceramic powder particles included in the body 110 during a sintering process, the body 110 may not have a hexahedral shape with a completely straight line, but may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first and second surfaces 1 and 2, connected to the third and fourth surfaces 3 and 4, and opposing each other in a third direction.

As margin regions in which the internal electrodes 121 and 122 are not disposed overlap each other on the dielectric layer 111, a step portion due to a thickness of the internal electrodes 121 and 122 may occur, so that a corner connecting the first surface and the third to fifth surfaces and/or a corner connecting the second surface and the third to fifth surfaces may have a shape contracted toward a center of the body 110 in the first direction when viewed from the first surface or the second surface. Alternatively, due to the contraction behavior during the sintering process of the body, a corner connecting the first surface 1 and the third to sixth surfaces 3, 4, 5 and 6 and/or a corner connecting the second surface 2 and the third to sixth surfaces 3, 4, 5 and 6 may have a shape contracted toward a center of the body 110 in the first direction when viewed from the first surface or the second surface. Alternatively, in order to prevent chipping defects, the corners connecting each surface of the body 110 may be rounded by performing a separate process, so that the corner connecting the first surface and the third to sixth surfaces and/or the corner connecting the second surface and the third to sixth surfaces may have a rounded shape.

Meanwhile, in order to suppress a step portion caused by the internal electrodes 121 and 122, the internal electrodes after stacking may be cut to be exposed to the fifth and sixth surfaces 5 and 6 of the body, and then, when forming the margin portions 114 and 115 by stacking a single dielectric layer or two or more dielectric layers on both surfaces of a capacitance formation portion Ac in the third direction (width direction), a portion connecting the first surface to the fifth and sixth surfaces and a portion connecting the second surface to the fifth and sixth surfaces may not have a contracted shape.

In a state in which a plurality of dielectric layers 111 forming the body 110 are sintered, boundaries between adjacent dielectric layers 111 may be integrated to a degree as to be difficult to identify without using a scanning electron microscope (SEM). The number of dielectric layers is not particularly limited, and may be determined in consideration of the size of the stacked electronic component. For example, the body may be formed by stacking 400 or more dielectric layers.

The dielectric layer 111 may be formed by producing a ceramic slurry including ceramic powder particles, an organic solvent and a binder, applying and drying the slurry on a carrier film to prepare a ceramic green sheet, and then sintering the ceramic green sheet. The ceramic powder particles are not particularly limited as long as sufficient electrostatic capacitance may be obtained, but for example, barium titanate-based (BaTiO₃)-based powder particles may be used as the ceramic powder particles. For more specific examples, ceramic powder particles may be at least one of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), and Ba(Ti_{1-y}Zr_{y})O₃ (0<y<1).

An average thickness td of the dielectric layer 111 is not particularly limited, but may be arbitrarily set depending on the desired characteristics or purpose. For example, the average thickness td thereof may be 100 um or less.

Here, the average thickness td of the dielectric layer 111 may refer to a first directional size of the dielectric layer 111 disposed between the internal electrodes 121 and 122. The average thickness of the dielectric layer 111 may be measured by scanning first and second directional cross-sections of the body 110 with a scanning electron microscope (SEM) of 10,000X magnification. More specifically, an average value may be measured by measuring the thickness at multiple areas of one dielectric layer 111, for example, 30 areas in which are spaced apart from each other at equal intervals in the second direction. The 30 areas with the equal intervals may be designated in the capacitance formation portion Ac to be described below. Additionally, when the average value is measured by extending an average value measurement up to 10 dielectric layers 111, an average thickness of the dielectric layers 111 may be further generalized.

The body 110 may include a capacitance formation portion Ac disposed inside the body 110 and configured to form a capacitance by including a first internal electrode 121 and a second internal electrode 122 disposed to face each other with the dielectric layer 111 interposed therebetween, and cover portions 112 and 113 formed above and below the capacitance formation portion Ac in the first direction.

Additionally, the capacitance formation portion Ac is a portion that contributes to forming the capacitance of a capacitor, and may be formed by repeatedly stacking a plurality of first and second internal electrodes 121 and 122 with a dielectric layer 111 therebetween.

The cover portions 112 and 113 may include an upper cover portion 112 disposed above and adjacent to the capacitance formation portion Ac in the first direction, and a lower cover portion 113 disposed below and adjacent to the capacitance formation part Ac in the first direction.

The upper cover portion 112 and the lower cover portion 113 may be formed by stacking a single dielectric layer or two or more dielectric layers in a thickness direction on upper and lower surfaces of the capacitance formation portion Ac, respectively, and may basically serve to prevent damage to the internal electrode due to physical or chemical stress.

The upper cover portion 112 and the lower cover portion 113 do not include internal electrodes and may include the same material as the dielectric layer 111.

That is, the upper cover portion 112 and the lower cover portion 113 may include a ceramic material, for example, a barium titanate (BaTiO₃)-based ceramic material.

In some example embodiments, an average thickness tc2 of the lower cover portion 113 in the first direction may be greater than an average thickness tc1 of the upper cover portion 112 in the first direction. Accordingly, acoustic noise may be reduced.

In some example embodiments, when the average thickness of the upper cover portion is referred to as tc1, the average thickness of the lower cover portion is referred to as tc2, and an average thickness of the identification portion is referred to as tc3, (tc1+tc3)/tc2 may be 0.85 or less. When tc1/tc2 is greater than 0.85, an effect of reducing the acoustic noise may be insufficient.

Additionally, tc1/tc2 may be 0.43 or more and 0.85 or less. When tc1/tc2 is greater than 0.85, the effect of reducing the acoustic noise may be insufficient, and when tc1/tc2 is less than 0.43, moisture resistance reliability may be reduced.

Here, the average thickness tc1 of the upper cover portion 112 may refer to an average size of the upper cover portion 112 in the first direction, and the average thickness tc2 of the lower cover portion 113 may refer to an average size of the lower cover portion 113 in the first direction.

Meanwhile, the average thickness of the upper cover portion tc1 and the average thickness of the lower cover portion tc2 are not particularly limited, and may be appropriately selected depending on the size of the multilayer electronic component.

For example, when the multilayer electronic component is 1005 size (length 1.0 mm, width 0.5 mm), an average thickness of an upper cover may be 58 um or more and 88 um or less. Additionally, the average thickness of the lower cover portion may be 104 um or more and 134 um or less.

When the average thickness of the upper cover is less than 58 µm, the moisture resistance reliability may be reduced, and when the average thickness thereof is more than 88 um, the thickness of the multilayer electronic component may be significantly increased.

When the average thickness of the lower cover is less than 104 um, the effect of reducing the acoustic noise may be insufficient, and when the average thickness thereof is more than 134 um, the thickness of the multilayer electronic component may be significantly increased.

In some example embodiments, when the average thickness of the capacitance formation portion is referred to as tac and the average thickness of the lower cover portion is referred to as tc2, tac/tc2 may be 4 or more and 7 or less.

The identification portion 140 may be disposed on an upper portion of the upper cover portion 112 in the first direction, and may include a water-repellent material and a non-conductive heat-resistant paint.

In order to reduce the acoustic noise, when making the lower cover portion 113 thicker than the upper cover portion 112, since a moisture penetration path in the upper cover portion 112 is shortened, most of the moisture resistance reliability may occur in the upper cover portion. According to some example embodiments of the present disclosure, as the identification portion 140 includes a water-repellent material and is disposed on the upper cover portion 112 which is thinner than the lower cover portion, the moisture resistance reliability may be improved by blocking the moisture penetration path.

Additionally, when using the light cover 214 to identify the upper portion and the lower portion of the multilayer electronic component 100, generally, the light cover 214 is formed by stacking one or more dielectric layers to which elements to implement different colors are added. However, in order to secure the sensitivity to identify the upper portion and the lower portion, since the light cover 214 had to be thick, the light cover had to be disposed on a lower portion of the multilayer electronic component 100, and there was a problem in that the design freedom of multilayer electronic components was reduced.

On the other hand, according to some example embodiments of the present disclosure, as the identification portion 140 includes a non-conductive heat-resistant paint, the identification portion 140 may identify the upper portion and the lower portion of the multilayer electronic component 100 due to a thin thickness thereof, so that the conventional thick light cover 214 may be replaced with the identification portion 140.

In some example embodiments, when the average thickness of the upper cover portion is referred to as tc1, and the average thickness of the identification portion is referred to as tc3 in the first direction, tc3/tc1 may be 0.21 or more and 0.83 or less. When tc3/tc1 is more than 0.83, the effect of reducing the acoustic noise may be insufficient, and when tc3/tc1 is less than 0.21, the moisture resistance reliability may be reduced.

As an example of a method of measuring tc3, tc1, tac, and tc2 described above, measurements may be performed on a cross-section cut from a center of the body in the third direction in the first and second directions, as illustrated in FIG. 2. Measurement equipment such as an optical microscope or scanning electron microscope may be used. At five areas spaced apart from each other at equal intervals in the second direction in the first and second directional cross-sections, first directional sizes of the identification portion 140, the upper cover portion 112, the capacitance formation portion Ac, and the lower cover portion 113 may be measured, respectively, and average values thereof may be obtained, which may be referred to as tc3, tc1, tac, and tc2, respectively. A first directional size of the upper cover portion may be a first directional size from an interface with the identification portion 140 to an internal electrode disposed in an uppermost portion in the first direction, and a first directional size of the lower cover portion may be a first directional size from the first surface to an internal electrode disposed in a lowermost portion in the first direction.

The non-conductive heat-resistant paint included in the identification portion 140 in the present disclosure may include a material that maintains an original color and does not conduct electricity even when heat treated at a temperature of 100 degrees or more and 1,400 degrees or less.

In some example embodiments, the non-conductive heat-resistant paint included in the identification portion 140 may be different in brightness or color from the lower cover portion 113. Additionally, the non-conductive heat-resistant paint included in the identification portion 140 may be different in brightness or color from the upper cover portion 112.

As a specific example of the non-conductive heat-resistant paint included in the identification portion 140, the non-conductive heat-resistant paint may include one or more selected from the group consisting of Ba, Si and Al. Additionally, even though the non-conductive heat-resistant paint does not include Ba, Si and Al, the non-conductive heat-resistant paint may include an inorganic ceramic element. Accordingly, even with a thin thickness, it may be possible to achieve sensitivity equal to or better than that of the conventional thick light cover 214.

In the present disclosure, the water-repellent material included in the identification portion 140 may include a material in which a contact angle with water is 100 degrees or more.

In some example embodiments, the water-repellent material included in the identification portion 140 may include one or more selected from the group consisting of silicon (Si) and fluorine (F), so that the identification portion 140 may have water-repellent properties. More specifically, the identification portion 140 may include one or more selected from the group consisting of a silicon-based hydrocarbon compound and a fluorine-based hydrocarbon compound.

A method of forming the identification portion 140 is not particularly limited, and for example, the identification portion 140 may be formed by mixing the non-conductive heat-resistant paint and the water-repellent material and then applying the mixture thereof to the upper portion of the upper cover portion 112 in the first direction.

In some example embodiments, the identification portion 140 may be disposed to cover an entire upper portion of the upper cover portion 112 in the first direction.

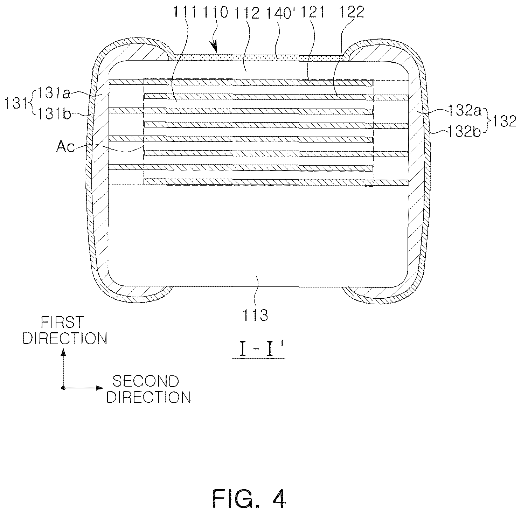

However, the present disclosure is not limited thereto, and referring to FIG. 4, which is a view corresponding to FIG. 2, as a multilayer electronic component according to another example embodiments of the present disclosure, the identification portion 140 may be disposed to cover only a portion of the upper portion of the upper cover portion 112 in the first direction, and a region not covered by the identification portion 140, among the upper portion of the upper cover portion 112 in the first direction, is may be covered by the external electrodes 131 and 132.

More specifically, the body 110 may include first and second surfaces opposing each other in the first direction, third and fourth surfaces connected to the first and second surfaces and opposing each other in the second direction, fifth and sixth surfaces connected to the first to fourth surfaces and opposing each other in the third direction, the external electrodes 131 and 132 may be disposed on the third and fourth surfaces and may extend to portions of the first, second, fifth and sixth surfaces, and the identification portion 140 may be disposed in a region of the second surface that is not covered by the external electrodes 131 and 132.

Additionally, the margin portions 114 and 115 may be disposed on a side surface of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in a width direction.

As illustrated in FIG. 3, the margin portions 114 and 115 may refer to regions between both ends of the first and second internal electrodes 121 and 122 and a boundary surface of the body 110 in a cross-section obtained by cutting the body 110 in a width-thickness (W-T) direction.

The margin portions 114 and 115 may basically serve to prevent damage to the internal electrodes due to physical or chemical stress.

The margin portions 114 and 115 may be formed by forming internal electrodes by applying a conductive paste on a ceramic green sheet except for regions in which the margin portion is to be formed.

Additionally, in order to suppress a step portion caused by the internal electrodes 121 and 122, the internal electrode after stacking may be cut to be exposed to the fifth and sixth surfaces 5 and 6 of the body, and then, the margin portions 114 and 115 may be formed by stacking a single dielectric layer or two or more dielectric layers on both side surfaces of the capacitance formation portion Ac in the third direction (width direction).

Meanwhile, a width of the margin portions 114 and 115 in the third direction is not particularly limited. However, in order to more easily achieve miniaturization and high capacitance of the multilayer electronic component, an average width of the margin portions 114 and 115 in the third direction may be 600 um or less.

The average width of the margin portions 114 and 115 may refer to an average size of a region in which the internal electrode is spaced from the fifth surface, in the third direction, and an average size of a region in which the internal electrode is spaced from the sixth surface, in the third direction, and may be an average value obtained by averaging third directional sizes of the margin portions 114 and 115 measured at five areas spaced apart from each other by an equal interval on the side surface of the capacitance formation portion Ac.

Accordingly, in some example embodiments, each of the average sizes of the regions in which the internal electrodes 121 and 122 are spaced apart from the fifth and sixth surfaces, in the third direction, may be 600 um or less.

The internal electrodes 121 and 122 may include first and second internal electrodes 121 and 122. The first and second internal electrodes 121 and 122 may be alternately disposed to face each other with the dielectric layer 111 included in the body 110 interposed, and may be exposed to the third and fourth surfaces 3 and 4 of the body 110, respectively.

The first internal electrode 121 may be spaced apart from the fourth surface 4 and may be exposed through the third surface 3, and the second internal electrode 122 may be spaced apart from the third surface 3 and may be exposed through the fourth surface 4. A first external electrode 131 may be disposed on the third surface 3 of the body and may be connected to the first internal electrode 121, and a second external electrode 132 may be disposed on the fourth surface 4 of the body and may be connected to the second internal electrode 122.

That is, the first internal electrode 121 is not connected to the second external electrode 132 but is connected to the first external electrode 131, and the second internal electrode 122 is not connected to the first external electrode 131 but is connected to the second external electrode 132. Accordingly, the first internal electrode 121 may be formed to be spaced from the fourth surface 4 by a certain distance, and the second internal electrode 122 may be formed to be spaced from the third surface 3 by a certain distance. Additionally, the first and second internal electrodes 121 and 122 may be spaced apart from the fifth and sixth surfaces of the body 110.

The conductive metal included in the internal electrodes 121 and 122 may be one or more selected from the group consisting of Ni, Cu, Pd, Ag, Au, Pt, In, Sn, Al, Ti, and alloys thereof, and the present disclosure is not limited thereto.

An average thickness te of the internal electrode in the first direction is not particularly limited. In this case, a thickness of the internal electrodes 121 and 122 may refer to a first directional size of the internal electrodes 121 and 122. For example, the average thickness te of the internal electrode may be 0.05 µm to 3.0 µm.

Here, the average thickness te of the internal electrode may be measured by scanning first and second directional cross-sections of the body 110 with a scanning electron microscope (SEM) of 10,000X magnification. More specifically, an average value may be measured by measuring the thickness at multiple areas of one internal electrode 121 or 122, for example, at 30 areas which are spaced apart from each other at equal intervals in the second direction. The 30 areas with the equal intervals may be designated in the capacitance formation portion Ac. Additionally, when the average value is measured by extending the average value measurement up to 10 internal electrodes 121 and 122, an average thickness of the internal electrodes 121 and 122 may be further generalized.

The external electrodes 131 and 132 may be disposed on the body 110.

For a specific example, the external electrodes 131 and 132 may be disposed on the third surface 3 and the fourth surface 4 of the body 110. The external electrodes 131 and 132 may include first and second external electrodes 131 and 132 disposed on the third and fourth surfaces 3 and 4 of the body 110, respectively, and connected to first and second internal electrodes 121 and 122, respectively.

In some example embodiments, a structure in which the multilayer electronic component 100 has two external electrodes 131 and 132 is described, but the number or shape of the external electrodes 131 and 132 may be changed depending on the shape of the internal electrodes 121 and 122 or other purposes.

Meanwhile, the external electrodes 131 and 132 may include any materials as long as the material has electrical conductivity, such as metals, and specific materials thereof may be determined in consideration of electrical properties, structural stability, and the like, and further, the external electrodes 131 and 132 may have a multilayer structure.

For example, the external electrodes 131 and 132 may include electrode layers 131a and 132a disposed on the body 110 and plating layers 131b and 132b formed on the electrode layers 131a and 132a.

For more specific examples of the electrode layers 131a and 132a, the electrode layers 131a and 132a may be fired electrodes including conductive metals and glass, or may be resin-based electrodes including conductive metals and a resin.

Additionally, the electrode layers 131a and 132a may be formed by sequentially forming a fired electrode and a resin-based electrode on a body. Additionally, the electrode layers 131a and 132a may be formed by transferring a sheet including the conductive metal onto the body, or may be formed by transferring a sheet including conductive metal onto a fired electrode.

A material with excellent electrical conductivity may be used as the conductive metal included in the electrode layers 131a and 132a, but the present disclosure is not limited thereto. For example, the conductive metal may be one or more selected from the group consisting of nickel (Ni), copper (Cu), and alloys thereof.

The plating layers 131b and 132b may serve to improve mounting characteristics. The types of plating layers 131b and 132b are not particularly limited, and the plating layers 131b and 132b may be plating layers including one or more of Ni, Sn, Pd, and alloys thereof, and may be formed of a plurality of layers.

For more specific examples of the plating layers 131b and 132b, the plating layers 131b and 132b may be Ni plating layers or Sn plating layers, and the plating layers 131b and 132b may be in the form of sequentially forming a Ni plating layer and a Sn plating layer on the electrode layers 131a and 132a, or may be in the form of sequentially forming the Sn plating layer, the Ni plating layer and the Sn plating layer. Additionally, the plating layers 131b and 132b may include a plurality of Ni plating layers and/or a plurality of Sn plating layers.

### <Inventive Example>

After preparing a sample chip by changing the average thickness of the identification portion tc3, the average thickness of the upper cover portion tc1 and the average thickness of the lower cover portion tc2, humidity reliability and acoustic noise were evaluated and are listed in Table 1 below.

With regard to the humidity reliability, after preparing 1200 sample chips for each test number, the sample chips were mounted on three boards capable of mounting 20 chips per channel and 20 channels on one board, that is, 400 chips on one board, and then, at a temperature of 85 °C and relative humidity of 85%, a voltage of 1.2Vr was applied for 24 hours, and thus, the sample chips whose insulation resistance value was lowered to 5 orders or less, as compared to an initial value, were determined to be defective, and the number of sample chips determined to be defective is listed.

The acoustic noise was measured with a 40HF equipment from GRAS. The acoustic noise was measured under the following conditions: DC-BIAS 3V, AC Voltage (Peak to Peak): 1Vp-p, Frequency: 400Hz to 20kHz (Sine Sweep), 400Hz to 10kHz (low freq.), and 400Hz to 20kHz (all freq.).

**Table 1:**

| Test Number | tc3 (µm) | tc1 (µm) | tc2 (µm) | tc3/tc1 | (tc1+tc3) /tc2 | Humidity Reliability | Acoustic Noise (dB) |
|---|---|---|---|---|---|---|---|
| 1* | 0 | 48 | 144 | 0.00 | 0.33 | 4/1200 | 21.20 |
| 2* | 2 | 48 | 142 | 0.04 | 0.35 | 4/1200 | 22.14 |
| 3* | 5 | 48 | 139 | 0.10 | 0.38 | 3/1200 | 23.09 |
| 4* | 7 | 48 | 137 | 0.15 | 0.40 | 1/1200 | 24.03 |
| 5 | 10 | 48 | 134 | 0.21 | 0.43 | 0/1200 | 24.98 |
| 6 | 15 | 48 | 129 | 0.31 | 0.49 | 0/1200 | 25.92 |
| 7 | 20 | 48 | 124 | 0.42 | 0.55 | 0/1200 | 26.87 |
| 8 | 30 | 48 | 114 | 0.63 | 0.68 | 0/1200 | 27.81 |
| 9 | 40 | 48 | 104 | 0.83 | 0.85 | 0/1200 | 28.76 |
| 10* | 50 | 48 | 94 | 1.04 | 1.04 | 0/1200 | 29.70 |

Referring to Table 1 above, it may be confirmed that when tc3/tc1 is less than 0.21, moisture resistance reliability is defective, and it may be confirmed that when tc3/tc1 is more than 0.83, the acoustic noise exceeds 29dB, and an acoustic noise suppression effect is insufficient.

On the other hand, in test numbers 5 to 9 in which tc3/tc1 was 0.21 or more and 0.83 or less, it may be confirmed that no moisture resistance reliability defects occur, and the acoustic noise is also suppressed.

Although the example embodiments of the present disclosure have been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a body including a capacitance formation portion including a dielectric layer and an internal electrode alternately disposed with the dielectric layer in a first direction, an upper cover portion disposed adjacent to the capacitance formation portion in the first direction, a lower cover portion disposed adjacent to the capacitance formation portion in the first direction, and an identification portion disposed adjacent to the upper cover portion in the first direction; and
an external electrode disposed on the body,
wherein an average thickness of the lower cover portion is greater than an average thickness of the upper cover portion in the first direction, and
the identification portion includes a water-repellent material and a non-conductive heat-resistant paint.

2. The multilayer electronic component according to claim 1, wherein, when the average thickness of the upper cover portion is tc1 and an average thickness of the identification portion is tc3, tc3/tc1 is 0.21 or more and 0.83 or less.

3. The multilayer electronic component according to claim 1, wherein, when the average thickness of the upper cover portion is tc1, the average thickness of the lower cover portion is tc2, and an average thickness of the identification portion is tc3, (tc1+tc3)/tc2 is 0.43 or more and 0.85 or less.

4. The multilayer electronic component according to claim 1, wherein, when an average thickness of the capacitance formation portion is tac, and the average thickness of the lower cover portion is tc2, tac/tc2 is 4 or more and 7 or less.

5. The multilayer electronic component according to claim 1, wherein an average thickness of the identification portion is 10 um or more and 40 um or less.

6. The multilayer electronic component according to claim 1, wherein the average thickness of the upper cover portion is 58 um or more and 88 um or less.

7. The multilayer electronic component according to claim 1, wherein the average thickness of the lower cover portion is 104 um or more and 134 um or less.

8. The multilayer electronic component according to claim 1, wherein the non-conductive heat-resistant paint is different in brightness or color from the lower cover portion.

9. The multilayer electronic component according to claim 1, wherein the non-conductive heat-resistant paint includes one or more selected from the group consisting of Ba, Si, Al, and inorganic ceramic elements.

10. The multilayer electronic component according to claim 1, wherein the water-repellent material includes one or more selected from the group consisting of Si and F.

11. The multilayer electronic component according to claim 1, wherein the water-repellent material includes at least one selected from the group consisting of a silicone-based hydrocarbon compound and a fluorine-based hydrocarbon compound.

12. The multilayer electronic component according to claim 1, wherein the identification portion is disposed to cover an entire upper portion of the upper cover portion in the first direction.

13. The multilayer electronic component according to claim 1, wherein the identification portion is disposed to cover only a portion of an upper portion of the upper cover portion in the first direction, and a region not covered by the identification portion, among the upper portion of the upper cover portion in the first direction, is covered by the external electrode.

14. The multilayer electronic component according to claim 1, wherein the body includes first and second surfaces opposing each other in the first direction, third and fourth surfaces connected to the first and second surfaces and opposing each other in a second direction, and fifth and sixth surfaces connected to the first to fourth surfaces and including fifth and sixth surfaces opposing each other in a third direction, and
the external electrodes are disposed on the third and fourth surfaces and extend to cover portions of the first, second, fifth and sixth surfaces, and the identification portion is disposed in a region of the second surface that is not covered by the external electrodes.
